# EUROPEAN PATENT APPLICATION

(11) **EP 1 318 679 A2**
(43) Date of publication of application: **11.06.2003**
(21) Application number: 02293011.9
(22) Date of filing: 06.12.2002
(51) Int. Cl.: H04N 7/173, H04H 9/00

(54) **Measurement of television audiences by observing user input**

(30) Priority: 10.12.2001 EP 01403186
(71) Applicant: Thomson Licensing S.A., 92100 Boulogne-Billancourt (FR)
(72) Inventor: Schaefer, Ralf, 35690 Acigné (FR); Letellier, Philippe, 35760 St. Grégoire (FR)
(74) Representative: Kohrs, Martin

(57) **Abstract**

This invention describes an observation equipment for conducting public opinion polls of television viewers. It describes mechanisms to capture input data directly at the source, i.e. the input equipment. The input actions from the television viewer are captured at a remote control. These input actions are stored in the remote control and then transferred later to an analysis server or depending on the network the data can be transferred directly to the analysis server. The analysis server implements a simulation of the user equipment and can therefore detect the user actions via the input events.

## Description

This invention concerns a method for measuring audience information of interactive applications and associated devices. This invention relates to the field of the television receiver and here specifically to building systems that are capable of analysing the user inputs with the help of a remote control.

### Technical background

Many companies are interested today to get feedback how their service or product is perceived by the user. This is true for clients of advertising companies who want to know whether their latest advertisement expenses contributed to a better knowledge of their product. This is equally true for the television business. Broadcasters, network operators and content providers want to know how many people watched the Saturday evening game show running at prime time. These are just a few examples for today's public opinion polls.

In the beginnings of the television era it was just important to get a feedback how big was the audience for a certain television event. The information was collected manually, the process was therefore slow and expensive.

Today there is a large quantity of television services and broadcasters, there are many companies wanting to collect user information, there is a large quantity of television viewers, data collection and analysis needs to be short and of course the process should be inexpensive and easy to handle.

Today more is required to get information back from users and the tendency is towards building user profiles. Building a user profile is not just observing which television event has been watched at prime time on Saturday evening. It could mean to observe on/off time of television sets and video recorders, which services and events have been watched and recorded over the period of a month, how many times did the user zap during an advertisement and so on.
Some requirements for such a television based user data collection system can be listed:
- The system shall observe what is being viewed in the household and what is being recorded
- The system described shall apply to analogue and digital television services
- The system shall observe a maximum of parameters such as
   - o: On-standby time of television sets and connected audiovisual devices (analogues and digital set top boxes)
   - o: Zapping and recording behaviour. At which time did the user zap to a certain service? When did the user start and stop a recording on which service? Such actions shall be captured with time stamps with the resolution of one second.
- The system shall be inexpensive and easy to install.
The intervention of the broadcaster/content provider should be reduced to a minimum and it shall work with existing audiovisual devices such as television sets, VCRs, analogue -and digital set top boxes.

### Technical problem

The technical problem consists of finding an inexpensive solution for acquiring data about viewing habits of television viewers with a minimum modification of the broadcast chain and user equipment.
A typical television viewer equipment consists of:
- Television set (low end to high end), mandatory
- VCR (low end to high end)
- Digital STB
- Analogue STB
Other devices like DVD players and audio equipment is not considered by this proposal. Of course, the equipment of the user can as well be a subset of it. Public opinion polls usually consider a great variation of the population, from people earning little money to the upper class, so it is important to take a variation of devices from low end to high end into account.

There is always a demanding company that wants to capture data about television viewers. These collected data can concern directly the product of the company so as to get a feedback about the product (product can be a TV event, an advertisement, ...). Sometimes it is as well interesting to collect information about competitors products, for example if M6 wants to collect information about the success of a TV show produced by TF1.

There is always a company or institute that is specialised in public opinion polls. These companies choose a representative group of the population, so as to perform the poll with this chosen subset. In the case of television opinion polls, the institute usually installs a special equipment in the home of the observed television viewers. Usual opinion polls in France are conducted with 300 to 500 observed households. This can vary from country to country (depends on number of inhabitants) and from project to project.

There is a company that develops and manufactures the observation equipment that is installed in the homes of the observed television viewers. Such products are usually sold in small numbers, as we have seen there are often 300 to 500 devices. Producing equipment in small quantities means specific development a high price for the equipment. So as to keep things simple, the specific equipment should consist of one device and not of a modification of the complete television equipment.

There is always the selected television viewer in his home who does not want to be disturbed in his usual habits by the observation equipment.

The goal of this invention is to describe an observation mechanism for public opinion polls that is based on existing TV equipment such as television sets, VCRs, analogue and digital set top boxes. Observation is done by capturing the user input at its source, that is the input equipment.
The subject of the invention is a method for measuring audience information carried out on a television receiver, the television receiver being controlled from a remote control (CPS) characterized in that it comprises the following steps:
- introducing of user input on the remote control (CPS),
- recording in a memory of the remote control (CPS) the identifier of the user input and collecting at least a part of the user inputs during a determined period,
- transmission the recorded user inputs to an analysis centre for determining audience information.

Another subject of the invention is a remote control comprising a central unit, a key interface for inputting user input, and means for emitting at least the code corresponding to the user input, characterized in that it comprises means for recording the identifiers of the user input and collecting at least a part the user inputs during a determined period, and means for emitting the stored identifiers during a determined period.

The present invention relates also:
- Measurement of television audiences by recording user events directly at the event source via the Capturing Processing Storing (CPS) mechanism.
- Measurement of television audiences by recording user events on the physical interface (infrared, RF, ...)
- Measurement of television audiences by using a simulation of the audiovisual user equipment in the Analysis System

Other characteristics and advantages of the invention will become apparent with the description of some of its embodiments, this description being given with reference to the drawings appended hereto, in which:
- figure 1 represents an example of a system to handle television based opinion polls by capturing the user input,
- figure 2 diagrammatically control device according to an example of a circuit useable for a such control,
- figure 3 represents another example of a system to handle television based opinion polls by capturing the user input.

### Invention description

This invention describes two television viewer observation equipments based on the principle to capture user input at the user input source. The described system is intended to be used in television based public opinion polls.

### Capturing Processing Storing (CPS) mechanism

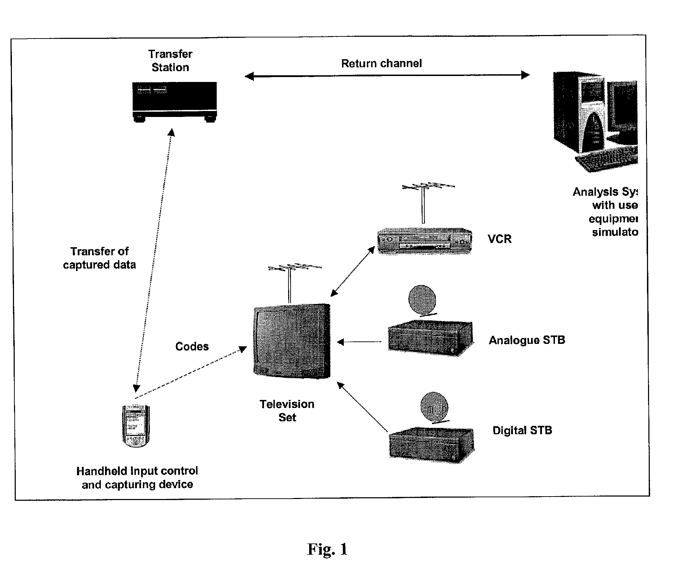

Figure 1 shows the first proposal how to handle television based public opinion polls by capturing the user input. In the middle of the Figure 1 there is the user equipment consisting of a television set, a VCR, an analogue STB and a digital STB. This an example set up and any subset or superset of audiovisual devices is a valid configuration for the principle described in this proposal. The television set and the VCR are connected to analogue terrestrial networks and the analogue and digital STB are connected to appropriate networks (here satellite networks).

In this proposal, the test television viewer uses a specific CPS device for controlling all his audiovisual equipments instead of his set of standard remote controls. Before starting the public opinion poll, the CPS device is configured so as to be able to control all the audiovisual equipment of the specific test television viewer. For doing so, the CPS device is able to generate the required protocols for controlling devices of many brands on the market. If a protocol is missing, it can be added. A protocol is mostly sent via the physical infrared port to the audiovisual target device (television set, VCR, ...).
The CPS device contains a mode switch, so that it can act as a remote control for the television set, for the VCR or for any other audiovisual device of the configuration. Either it contains keys for each specific action, like PROGRAM1, PROGRAM+, VOLUME+ etc or it can use virtual keys on a touch screen. This is implementation dependent and is not relevant for the audience measurement principle described in this invention.
Each key that is pressed by the television viewer on the CPS device is processed before it is sent out on its physical interface. Processing algorithms in the CPS device can have different complexity. A simple processing would mean recording the user key presses with the corresponding time stamp. For the time resolution one second is a good basis. For example, if the television viewer presses on the TF1 button on the virtual screen of the CPS device, the program TF1 with the corresponding time stamp (date/time code with a specified resolution) is recorded in the memory of the CPS device. After the action is recorded, the corresponding code is sent over the physical interface. There can be a smart algorithm in the CPS device. If the user presses for example two times consecutively on the TF1 button, this could be seen as the case that the television set did not get the code from the physical interface and that the user insisted again to zap to this program. In this case the CPS device could decide not to record the second code. The processing could as well be more complex in the CPS device, such as the emulation of the user interface of a specific audiovisual device so as to record more selective actions as just key events. This is seen as implementation dependent.

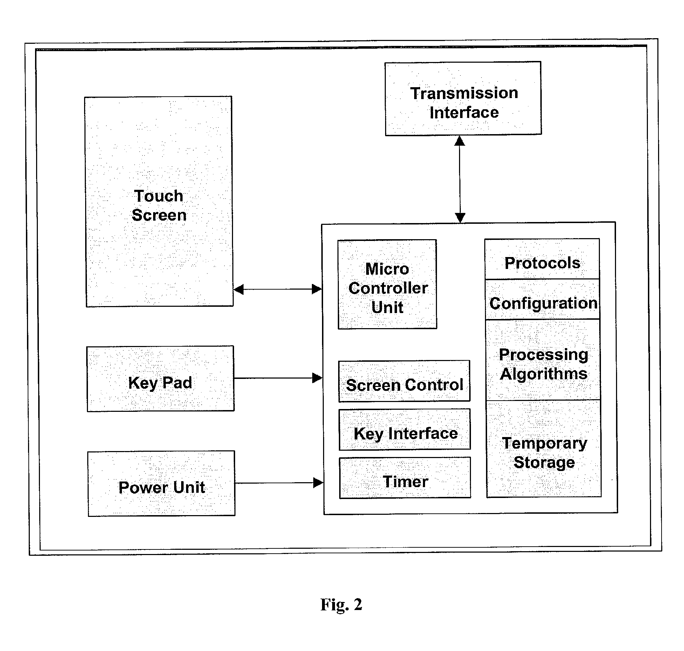

Figure 2 shows a block diagram of the CPS device. It shows the important principle to perform the steps:
1.) User action capturing
2.) Processing
3.) Temporarily storage
4.) Code transmission over a physical interface Classical systems (remote controls) perform just key scanning and code transmission. An entry key of the remote launches the code transmission after a determined period of using.

The Touch Screen is used for displaying a virtual keyboard on the screen and to capture user input. The Touch Screen is not essential for the CPS device, but it improves the usability. It can be used instead of a classical keyboard. The Transmission Interface is used for sending the codes to the audiovisual devices and it is able to send all needed codes. These codes are mostly infrared based. The Transmission Interface can be used as well for sending the contents of the Temporary Storage to the Transfer Station shown in Figure 1. This is needed so as to get data out of the CPS device.

Power Unit, Screen Control, Key Interface and Micro Controller Unit are self describing and perform their work as in other devices.

The Protocols block contains descriptions for the protocols used by the audiovisual devices in the user test environment. Either it contains all relevant protocols of usual devices on the market, or just the needed protocols are uploaded during configuration of the test environment.

The Configuration block configures the CPS device to the specific user test appliance. It can contain a list of audiovisual devices in the test park with key mappings for each audiovisual device in the test environment. The CPS device stores the user actions if they concern a device in the list.

The Processing Algorithms block contains algorithms which process the user actions before they are stored in the Temporary Storage. In a very simple case it just takes the key code of the selected device and stores it with a time stamp in Temporary Storage.

Temporary Storage is used to cache the processed user inputs. These data are transferred from time to time via the Transfer Station (Figure 1) to the Analysis System (Figure 1). An entry key on the CPS device launches the transmission to the transfer station.

The CPS device contains a clock that provides date and time information for the time stamps.

The Transfer Station in Figure 1 is the interface between the CPS device and the Analysis System. It reads out the data stored in the Temporary Storage and transfers them to the Analysis Station which is usually located in the facilities of the institute conducting the public opinion poll.

The Analysis Station gets all the data recorded by the CPS devices. It contains a simulation of the user devices in the test environment. In this way the Analysis Station can figure out what a certain series of keys means. In test environments which are just interested in getting information about on/off of devices or on which services the user zapped, the simulation is quite simple. In the case of the existence of interactive applications, the simulation is more complicated.

In this proposal the test environment simulation can be done in collaboration between the CPS device (via Processing Algorithms) and the Analysis Station.

### Direct Code Capturing (DCC) mechanism

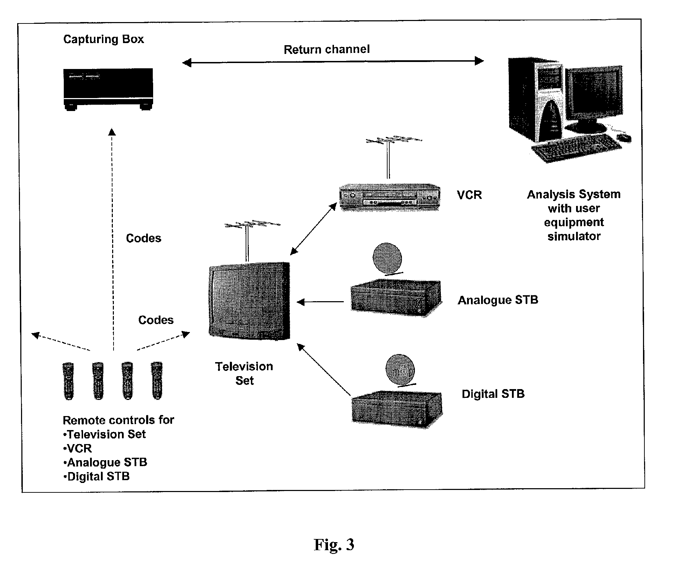

Figure 3 shows the second proposal how to handle television based public opinion polls by capturing the user input. In the middle of the Figure 3 we see the audiovisual user equipment consisting of a television set, a VCR, an analogue STB and a digital STB. This an example set up and any subset or superset of audiovisual devices is a valid configuration for the principle described in this proposal. The television set and the VCR are connected to analogue terrestrial networks and the analogue and digital STB are connected to appropriate networks (here satellite networks).

The difference between the user test environment set up in Figure 1 and Figure 3 are that in Figure 3 the user input is captured directly by the Capturing Box. The test television viewer uses the remote controls which were delivered with his audiovisual products. The Capturing Box records all the codes with a corresponding time stamp and transfers them from time to time to the Analysis Station. The Analysis Station gets all the data recorded by the Capturing Box. It contains a simulation of the user devices in the test environment. In this way the Analysis Station can figure out what a certain series of keys means. In test environments which are just interested in getting information about on/off of devices or on which services the user zapped, the simulation is quite simple. In the case of the existence of interactive applications, the simulation is more complicated.

This invention has the following advantages :
- Use of existing audiovisual devices for television audience measurement
- Use of the existing broadcast chain
- Very easy audience measurement set-up

## Claims

1. Method for measuring audience information carried out on a television receiver, the television receiver being controlled from a remote control (CPS) **characterized in that** it comprises the following steps:
- introducing of user input on the remote control (CPS),
- recording in a memory of the remote control (CPS) the identifier of the user input and collecting at least a part of the user inputs during a determined period,
- transmission the recorded user inputs to an analysis centre for determining audience information.

2. Method for measuring audience information as defined in claim 1, **characterized in that** it comprises a step of configuration of the remote control (CPS), the configuration allowing filtering the recorded user input according to the device concerned by the user input.

3. Method for measuring audience information as defined in claim 1 or 2, **characterized in that** it comprises a step of processing the user input, this step determining if the introduced user input is recorded and transmitted.

4. Method for measuring audience information as defined in claim 3, **characterized in that** the step of processing analyses the time between two identical user inputs, the second user input is not recorded and transmitted if the time is less than a determined value.

5. Method for measuring audience information as defined in previous claims, **characterized in that** the user input is dated in the remote control, the date and the time being stored with the identifier of the user input.

6. Remote control (CPS) comprising a central unit, a key interface for inputting user input, and means for emitting at least the code corresponding to the user input, **characterized in that** it comprises means for recording the identifiers of the user input and collecting at least a part the user inputs during a determined period, and means for emitting the stored identifiers during a determined period.

7. Remote control (CPS), as defined in claim 6, **characterized in that** it comprises means for receiving a configuration block, the configuration block allowing filtering the recorded user input according to the device concerned by the user input.

8. Remote control (CPS), as defined in claim 6 or 7, **characterized in that** it comprises a processing means for analyse the introduced user input, the processing means determining if the introduced user input is recorded and emitted.

9. Remote control (CPS), as defined in claim 8, **characterized in that** it comprises a timer, the processing means analyses the time indicated by the timer between two identical user inputs and prevents the record and emitting of the user input if the time is less than a determined value.

10. Remote control (CPS), as defined in any previous claims 6 to 9, **characterized in that** it comprises a touch screen for displaying a virtual keyboard and to capture user input.

11. Remote control (CPS), as defined in any previous claims 6 to 10, **characterized in** the means for emitting at least the code corresponding to the user input and the means for emitting the stored identifiers during a determined period, are the same.

12. Remote control (CPS), as defined in any previous claims 6 to 11, **characterized in that** it comprises a timer indicating the date and the time when each user input is introduced, the date and the time associated with the identifier of user input being recorded in the recording means.
